# EUROPÄISCHE PATENTSCHRIFT

(11) **EP 1 240 770 B1**
(45) Veröffentlichungstag und Bekanntmachung des Hinweises auf die Patenterteilung: **08.10.2003**
(21) Anmeldenummer: 00990736.1
(22) Anmeldetag: 13.12.2000
(51) Int. Cl.: H04M 3/32

(54) **VERFAHREN UND ANORDNUNG ZUR DEZENTRALEN STEUERUNG EINES PRÜFPROZESSES IN EINEM TELEKOMMUNIKATIONSNETZ**
METHOD AND ARRANGEMENT FOR LOCALLY CONTROLLING A TESTING PROCESS IN A TELECOMMUNICATIONS NETWORK
PROCEDE ET DISPOSITIF DE COMMANDE DECENTRALISEE D'UN PROCESSUS DE CONTROLE DANS UN RESEAU DE TELECOMMUNICATION

(30) Priorität: 22.12.1999 DE 19962216; 27.09.2000 DE 10047910
(43) Veröffentlichungstag der Anmeldung: 18.09.2002
(73) Patentinhaber: SIEMENS AKTIENGESELLSCHAFT, 80333 München (DE)
(72) Erfinder: DROZ, Ole, Sanford, FI 32771 (US); HOFER, Rupert, A-3714 Roseldorf (AT); KRENN, Andreas, A-1210 Wien (AT); SCHMÖLLER, Franz, 82110 Germering (DE); SCHWARZ, Leopold, A-2061 Hadres (AT); WIESER, Stefan, A-2120 Wolkersdorf (AT)
(74) Vertreter: Peham, Alois, Dipl.-Ing.
(86) Internationale Anmeldenummer: EP0012666
(87) Internationale Veröffentlichungsnummer: WO01047245

(56) Entgegenhaltungen:
- EP-A- 0 760 570
- DE-A- 3 424 124
- FR-A- 2 618 627

## Beschreibung

### Technisches Gebiet :

Die Erfindung betrifft ein Verfahren zur Prüfung und Instandhaltung einer Vermittlungsstelle in einem Telekommunikationsnetz, der daran angeschlossenen Geräte, insbesondere Telekommunikationsendgeräte, und der Verbindungen im Telekommunikationsnetz. Weiterhin betrifft die Erfindung eine Anordnung zur Durchführung des Verfahrens.

### Stand der Technik:

Die große Anzahl von Teilnehmern, die an eine Vermittlungsstelle in einem Telekommunikationsnetz angeschlossen sind und die Fülle von Diensten, die in einem Telekommunikationsnetz angeboten werden, führen zu einer vergleichsweise hohen Wahrscheinlichkeit für das Auftreten von Fehlern. Durch die große Bedeutung eines funktionstüchtigen Telekommunikationsnetzes für das wirtschaftliche und soziale Zusammenleben, stellt eine Störung eines Teilnehmeranschlusses oder der Verbindungsleitungen im Telekommunikationsnetz ein schwerwiegendes technisches Problem dar.

Um ein Höchstmass an Übertragungssicherheit zu gewährleisten wurde und wird daher die bestehende analoge Übertragungstechnik in zunehmenden Maße durch die digitale Übertragungstechnik ersetzt.

Ein analoges zu übertragendes Signal wird dabei in diskrete Schritte unterteilt, wobei jedem durch die Unterteilung entstandenen Bereich eine Binärzahl zugeordnet wird. Die Übertragung der jeweiligen Binärzahl erfolgt ziffernweise, das heißt durch Übertragung eines aus Nullen und Einsen bestehenden Binärmusters, wobei der Null und der Eins verschiedene Wertebereiche einer elektrischen Größe, zumeist der Spannung, zugeordnet sind. Zwischen den beiden Wertenbereichen befindet sich ein Bereich, der nicht zur Übertragung herangezogen wird. Eingestreute Störungen wirken sich bei dieser Technik daher erst dann auf die Übertragungsqualität aus, wenn das Störsignal diesen an sich ungenutzten Bereich überschreitet. Im Gegensatz dazu steht die analoge Übertragungstechnik, bei der sich prinzipiell jede Störung negativ auf die Übertragungsqualität auswirkt. Die Digitaltechnik ist also weit weniger störempfindlich als die Analogtechnik.

Bei der drahtgebundenen Übertragungstechnik kommen dabei vorwiegend Systeme zum Einsatz, welche nach dem Standard für "Integrated Services Digital Network", kurz ISDN, arbeiten. Neuere Techniken sehen aber auch den paketvermittelten Datenverkehr für klassische Telefonnetze vor. Eine scharfe Trennlinie zwischen klassischen Telekommunikationsnetzen und klassischen Computer-Datennetzen kann an dieser Stelle daher nicht gezogen werden. Beispiele für derartige Standards sind das "Transmission Control Protocol / Internet Protocol", kurz TCP/IP, und H.323. Neben den erwähnten Beispielen existiert aber noch eine Fülle weiterer Standards. Der paketvermittelte Sprechverkehr ist auch unter dem Begriff "Voice over Internet Protocol", kurz VoIP bekannt.

In Mobilfunknetzen sind beispielsweise der Standard für "Global System for Mobile Communication", kurz GSM, oder der "Standard Universal Mobile Telephone System", kurz UMTS, für die digitale Übertragungstechnik maßgebend. Bei den paketvermittelten Systemen ist zum Beispiel das "General Packet Radio Service", kurz GPRS, ein wichtiger Standard.

Trotz aller Sorgfalt, vorgesehener Fehlertoleranzen und Sicherheitsmechanismen in den Übertragungsprotokollen können Störungen im Telekommunikationsnetz jedoch auch durch die Verwendung der digitalen Übertragungstechnik nicht gänzlich ausgeschlossen werden.

Da auf diesen Leitungen neben dem Sprechverkehr auch vermehrt wichtige digitale Daten übermittelt werden kann ein Fehler im Telekommunikationsnetz besonders unangenehme Folgen haben. Um einer derartigen Störung weitgehend vorzubeugen, unterliegen die Komponenten eines Telekommunikationsnetzes daher einer ständigen Kontrolle.

Aus der DE 19609510 C2, "Leitungsprüfvorrichtung für einen ISDN Bus" vom 11. März 1996 ist es bekannt, dass mit Hilfe eines Gerätes, welches an das Netzabschlussgerät der ISDN-Teilnehmeranschlussleitung angeschlossen wird, Spannungen zwischen den einzelnen Adern der Leitungen angezeigt werden. Auf diese Weise kann die korrekte Verdrahtung oder auch die unterbrechungsfreie Verbindung in das Telekommunikationsnetz überprüft werden.

Die US 5128619 "System and method of determining cable characteristics" vom 7. Juli 1992 beschreibt, dass mit Hilfe eines Prüfgerätes, welches an einem Ende einer Leitung angeschlossen wird, die Leitung auf Fehler hin überprüft, die Impedanz, die Länge und die Dämpfung der Leitung ermittelt und schließlich die Eignung für die digitale Datenübertragung festgestellt wird.

Aus der US 6064212 "Method for determining the transmission characteristics of an electric line" vom 16. Mai 2000 ist es weiterhin bekannt, dass die Übertragungseigenschaften einer Leitung dadurch bestimmt werden können, dass ein spezielles Signal an einem Ende der Leitung eingespeist und das am anderen Ende der Leitung empfangene Signal ausgewertet wird.

Die erwähnten Verfahren ermöglichen also Tests an digitalen Leitungen unter der Voraussetzung, dass der Zugang zu mindestens einem Ende der zu prüfenden Leitung möglich ist. Der Einsatz eines Technikers, der die Prüfung vor Ort vornimmt, ist aufwendig und bedingt auch eine relativ lange Zeitspanne zur Fehlererkennung und Fehlerbehebung. Dies widerspricht der Forderung, auftretende Fehler in einem Telekommunikationsnetz rasch zu beheben um den dadurch verursachten Schaden möglichst gering zu halten. Darüber hinaus müssen vom Wartungstechniker spezielle Prüfgeräte mitgeführt werden. Dabei sind dem Techniker hinsichtlich Anzahl, Größe und Gewicht der benötigten Geräte aufgrund in seiner Person gelegenen Eigenschaften enge Grenzen gesetzt.

Aus den erwähnten Gründen werden nach dem Stand der Technik in die Vermittlungsstellen im Telekommunikationsnetz daher oft Prüffunktionen zum Test der Teilnehmeranschlüsse oder der Leitungen zwischen den Vermittlungsstellen integriert.

Diese Prüfungen umfassen beispielsweise die
- Rufnummernorientierte Prüfung von Teilnehmeranschlüssen.
- Gruppenprüfung mit Auflistung der einzelnen Messwerte.
- Einzelprüfungen spezieller Art.
- Einspeisen von analogen Suchtönen für die Leitungsidentifizierung.
- Messen und Speichern der charakteristischen Leitungsdaten.
- Zugriff auf eine zentral geführte Datenbank, in der Informationen über in der Vergangenheit liegende Vorkommnisse, wie zum Beispiel die Anzahl der Störungen, Dauer und Zeitpunkt des Auftretens der Störung, sowie den für das Beheben einer Störung zuständigen Bearbeiter und den daraus resultierenden Zeit- und Materialaufwand gespeichert werden. Weiterhin werden beispielsweise Daten über die relative Verfügbarkeit, beziehungsweise Ausfallzeit in dieser Datenbank verwaltet.
- Kontaktaufnahme mit dem Teilnehmer zum Zwecke der Fehlerbehebung.

Der Prüfprozess wird dabei mit Hilfe eines Bedien-Terminals für die Vermittlungsstelle oder mittels Personal-Computer, der mit der Vermittlungsstelle verbunden ist, gesteuert. Das mit der Prüfung und Instandhaltung betraute Personal muss den Test also nicht vor Ort durchführen sondern kann ihn von der Vermittlungsstelle aus durchführen, an welche die zu testende Leitung angeschlossen ist. Dieses Prüfsystem entlastet den Wartungstechniker, bedingt aber, dass für jede Vermittlungsstelle zumindest ein Prüfplatz vorgesehen werden muss.

Die Schadensbehebung selbst kann oft aber nur vor Ort durchgeführt werden, weswegen die zentralen Prüfungs- und Instandhaltungsmaßnahmen nur insofern Vorteile bietet, als dem Techniker eine Analyse des aufgetreten Fehlers vorgelegt werden kann, die aus den in der Vermittlungsstelle zur Verfügung stehenden Daten generiert wird. Zur Qualitätssicherung ist das Durchführen zusätzlicher Prüfungen jedoch häufig nötig.

Eine Kombination zentral ablaufender Prüfprozesse und der Möglichkeit eine Prüfung auch auf einfache Weise dezentral durchführen zu können ist aus diesen Gründen sehr vorteilhaft.

Zu diesem Zweck existiert ein Testsystem, welches die dezentrale Steuerung eines in der Vermittlungsstelle ablaufenden Prüfprozesses zum Test von Komponenten erlaubt, die mit analoger Übertragungstechnik arbeiten. Dies erfolgt mit Hilfe eines Personal-Computers, welcher mittels analogem Modem mit dem Telekommunikationsnetz verbunden ist, und auf dem ein speziell auf diesen Anwendungszweck ausgerichtetes Programm abläuft. Die Übertragung der Steuerdaten vom Personal-Computer zur Vermittlungsstelle und der Ergebnisse von der Vermittlungsstelle zum Personal-Computer erfolgt dabei mit Hilfe von "Dual Tone Multi Frequency Codes", kurz DTMF-Codes.

Der Wirkungsbereich dieses Systems ist aber wegen der Verschiedenartigkeit der eingesetzten Leitungen und Übertragungsformate innerhalb eines Telekommunikationsnetzes wesentlich eingeschränkt. Einrichtungen in einem Telekommunikationsnetz, welche Daten beispielsweise digital übertragen, können nach dem Stand der Technik aufgrund der speziellen Gegebenheiten nicht dezentral überprüft werden. Zu den Hinderungsgründen zählen dabei unter anderem die Sicherung der Datenübertragung mittels eigener Prüfrahmen oder Prüfsummen, der Abschluss der Teilnehmerleitung mit einer Netzabschlusseinrichtung bei ISDN-Basisanschlüssen, Unterschiede beim Verbindungsaufbau gegenüber analogen Techniken, gerätespezifischer Eigenschaften der Anschlussmodule und die im Vergleich zu analogen Systemen gänzlich anders gearteten Prozesse, die in einem Telekommunikationsnetz ablaufen.

Voraussetzung für einen erfolgreichen Ablauf der Prüfung ist weiterhin die Kommunikation mit der Vermittlungsstelle und somit ein funktionstüchtiger Teilnehmeranschluss. Oft ist diese Kommunikation jedoch nicht möglich, da eine Störung derselben den zu behebenden Fehler darstellt. FR-A-2 618 627 offenbart ein Prüfgerät, welches zu eine Vermittlungsstelle angeschlossen ist.

Der Erfindung liegt also die Aufgabe zugrunde, ein Verfahren nach dem Anspruch 1 und eine Anordnung nach dem Anspruch 8 anzugeben, welches die dezentrale Steuerung eines Prüfprozesses zur Prüfung und Instandhaltung einer Vermittlungsstelle in einem Telekommunikationsnetz und der daran angeschlossenen Leitungen und Geräte verbessert.

Darstellung der Erfindung:

Dies geschieht erfindungsgemäß mit einem Verfahren der eingangs erwähnten Art,
- bei dem ein Prüfgerät ausschließlich an einen einzigen beliebigen digitalen Teilnehmeranschluss im Telekommunikationsnetz angeschlossen wird und
- bei dem die Steuerung des in der Vermittlungsstelle für die Prüfung und Instandhaltung ablaufenden Prüfprozesses mit Hilfe dieses Prüfgerätes erfolgt.

Durch die Erfindung werden folgenden Vorteile erzielt:
- Prüfprozesse, die zentral in der Vermittlungsstelle gespeichert sind, können vergleichsweise einfach vom Betreiber eines Telekommunikationsnetzes verändert oder erweitert werden.
- Wesentliche Steigerung des Einsatzbereiches eines dezentralen Prüfsystems, da die Anschaltung des Prüfgerätes an das Telekommunikationsnetz über einen beliebigen digitalen Teilnehmeranschluss im Telekommunikationsnetz erfolgen kann.
- Das Prüfpersonal muss lediglich ein einziges Prüfgerät mitführen um eine Vielzahl von Tests und Maßnahmen zur Instandhaltung durchführen zu können.
- Ein beliebiger Teilnehmeranschluss im Telekommunikationsnetz kann, unabhängig von der Anschaltung an eine bestimmte Vermittlungsstelle, getestet werden.
- Teilnehmeranschlüsse können auch ohne Zugangsmöglichkeit zu einer Vermittlungsstelle getestet werden. Dies ist unter anderem im Zusammenhang mit Betreibern eines Telekommunikationsnetzes interessant, die Teile eines Telekommunikationsnetzes von einem anderen Unternehmen angemietet haben. Denkbar ist aber auch, dass die Vermittlungsstelle aufgrund ihres Aufstellungsortes nicht oder nur unter beträchtlichen Schwierigkeiten zugänglich ist.
- Schnelle und sichere Datenübertragung zwischen Prüfgerät und Vermittlungsstelle.

Unter dem Gesichtspunkt der Vereinheitlichung klassischer Telekommunikationsnetze und klassischer Computernetze sind unter dem Begriff "Teilnehmeranschluss" auch Anschlüsse an Datennetze zu verstehen, die dem digitalen Datenverkehr oder dem paketvermittelten Sprechverkehr dienen, insbesondere Anschlüsse an das Internet.

Weiterhin sind unter digitalen Teilnehmeranschlüssen auch Anschlüsse zu verstehen, über die gleichzeitig zur digitalen Übertragung eine analoge Übertragung auf einem niedrigen Frequenzband erfolgt. Solche Verfahren sind unter dem Begriff "Digital Subscriber Line", kurz DSL, bekannt und dienen dazu, bestehende Telefonleitungen neben dem vorhandenen Sprachkanal mit einem leistungsfähigen Digitalanschluss auszustatten. In diesem Zusammenhang bezieht sich das erfindungsgemäße Verfahren ausschließlich auf den breitbandigen Anteil des Teilnehmeranschlusses.

Digitale Teilnehmeranschlüsse können aber beispielsweise auch durch eine Mobilfunkverbindung realisiert werden, über welche die Daten digital übertragen werden. In diesem Zusammenhang sind zum Beispiel der GSM-Standard und der UMTS-Standard maßgebend.

Günstig ist es, wenn der Prüfprozess das Messen elektrischer Parameter von Telekommunikationsendgeräten, Leitungen und Modulen umfasst, insbesondere dass Messen elektrischer Spannungen, Ströme, Widerstände, Kapazitäten und Induktivitäten. Somit können grundlegende Parameter im Telekommunikationsnetz gemessen und an das Prüfgerät übermittelt werden. Diese Funktion ersetzt weitgehend das Universalmessgerät, welches vom Wartungsperson normalerweise mitgeführt werden muss.

Günstig ist es ferner, wenn der Prüfprozess das Einspeisen analoger Suchtöne in an die Vermittlungsstelle angeschlossener Leitungen umfasst. Mit diesem Verfahren wird die Möglichkeit geschaffen, einzelne Leitungsadern eines Kabelbaumes auf effiziente Weise zu identifizieren. Da diese Aufgabe oftmals im Feld gelöst werden muss, ist der Wert der Erfindung hier gut erkennbar.

Eine vorteilhafte Ausgestaltung der Erfindung ist gegeben, wenn der mittels Prüfgerät angeforderte Prüfprozess mit einer zeitlichen Abhängigkeit ausgeführt wird, insbesondere verzögert oder periodisch wiederkehrend. Dadurch wird die Möglichkeit geschaffen, dass eine Prüfung für einen späteren Zeitpunkt angefordert wird, wenn ein unmittelbarer Beginn des Prozesses zur Prüfung oder Instandhaltung nicht möglich oder unerwünscht ist. Eine zeitaufwendige oder rechenintensive Prüfung kann beispielsweise für einen Zeitpunkt angefordert werden, zu dem sich dieser Vorgang nicht nachteilig für die Nutzung des Telekommunikationsnetzes auswirkt. Des weiteren kann eine Prüfung auch periodisch wiederkehrend angefordert und so zum Beispiel eine Testreihe erhalten werden, die Messwerte zu verschiedenen Zeitpunkten enthält.

Günstig ist es auch, wenn eine Gruppe von Einzelprüfungen durch Eingabe eines einzigen Befehls auf dem Prüfgerät ausgeführt wird. So können umfangreiche Prüfungen auf einfache Weise durchgeführt werden. Dabei kann die Gruppe von Einzelprüfungen beispielsweise durch Übermittlung eines einzigen Befehls vom Prüfgerät zur Vermittlungsstelle oder durch sequentielle Abarbeitung einer im Prüfgerät gespeicherten Liste und Übermittlung mehrerer Befehle gestartet werden. Die Einzeltests können sich dabei auch auf verschiedene Teilnehmeranschlüsse beziehen, wobei gegebenenfalls auch ein daran angeschlossenes Telekommunikationsendgerät umfasst ist. Auf diese Weise kann eine Gruppe von Teilnehmeranschlüssen auf besonders effiziente Weise getestet werden. Denkbar ist auch, dass die Prüfung eines Teilnehmeranschlusses, die aufgrund fehlender Ressourcen zu einem bestimmten Zeitpunkt nicht erfolgen konnte, automatisch zu einem späteren Zeitpunkt durchgeführt wird.

Eine vorteilhafte Ausgestaltung des erfindungsgemäßen Verfahrens ist gegeben,
- wenn als Prüfprozess das Auslesen und Verändern von Daten, die der Prüfung und Instandhaltung der Vermittlungsstelle oder daran angeschlossener Telekommunikationsendgeräte dienen, vorgesehen ist,
- wenn diese Daten in einem Modul der Vermittlungsstelle oder daran angeschlossener Geräte, insbesondere Telekommunikationsendgeräte, gespeichert werden,
- wenn der Prüfprozess das Auslesen und Verändern eines auf einen Teilnehmeranschluss bezogenen Datensatz einer Datenbank umfasst und
- wenn dieser Datensatz Informationen über in der Vergangenheit liegende Vorkommnisse dieses Teilnehmeranschlusses beinhaltet, insbesondere die Anzahl der Störungen, deren Dauer und den Zeitpunkt ihres Auftretens, die relative Ausfallszeit beziehungsweise die Verfügbarkeit und den zuständigen Bearbeiter aufgetretener Störungen, sowie den dazugehörigen Zeit- und Materialaufwand.

Somit können prüftechnisch relevante Daten aus den Speicherregistern der Module der Vermittlungsstelle oder daran angeschlossener Geräte ausgelesen werden. Diese Daten werden beispielsweise durch routinemäßig ausgelöste Prüfprozesse ermittelt und gespeichert. Veränderliche Daten können jedoch auch Parameter beinhalten, die das Verhalten der Vermittlungsstelle oder eines daran angeschlossenen Gerätes beeinflussen. Diese Daten sind beispielsweise manuell einstellbare oder auf dem Wege der Adaption erhaltene Übertragungsgeschwindigkeiten auf einer Leitung und dienen dazu, die Bitrate der Übertragungskapazität der Leitung anzupassen. Veränderliche Daten müssen jedoch nicht für die unmittelbare Beeinflussung der Abläufe im Telekommunikationsnetz herangezogen werden, sondern können auch lediglich der Dokumentation bestimmter Ereignisse dienen, wie zum Beispiel ein Bericht über einen aufgetretenen Fehler beziehungsweise dessen Behebung. Diese Berichte können bestimmten Personen, beispielsweise dem Teilnehmer, dessen Teilnehmeranschluss als fehlerhaft gemeldet wurde, oder auch Bediensteten des Betreibers oder Herstellers des Telekommunikationsnetzes, automatisch zugestellt werden. Dabei können übliche Transportmechanismen sowie Dateiformate angewendet werden, zum Beispiel die elektronische Textnachricht, kurz Email, oder der "Short Message Service", kurz SMS.

Günstig ist es weiterhin, wenn der Prüfprozess den Aufbau einer Gesprächsverbindung umfasst, insbesondere den Verbindungsaufbau zwischen dem Prüfgerät und einem Telekommunikationsendgerät oder den Aufbau einer zusätzlichen Gesprächsverbindung zu einer bestehenden Gesprächsverbindung zwischen einem ersten Telekommunikationsendgerät und zumindest einem zweiten Telekommunikationsendgerät. Auf diese Weise wird eine einfache Möglichkeit geschaffen, mit einer weiteren mit der Prüfung betrauten Person, oder gegebenenfalls auch mit dem Teilnehmer des Telekommunikationsnetzes, dessen Teilnehmeranschluss als fehlerhaft gemeldet wurde, in Kommunikation zu treten. Dabei können spezifische Rufnummern relevanter Gesprächspartner zu einem speziellen Prüfauftrag in das Prüfgerät gespeichert oder von der Vermittlungsstelle an dieses übermittelt werden, um so dem Prüfpersonal die Kontaktaufnahme zu diesen Personen zu erleichtern. Eine Suche in Telefonbüchern oder Rückfrage in der Zentralstelle der Prüfungs- und Instandhaltungsabteilung wird so in den meisten Fällen überflüssig sein. Darüber hinaus kann das Prüfpersonal eine weitere Gesprächsverbindung zu einer schon bestehenden Gesprächsverbindung aufbauen um so beispielsweise die betreffenden Teilnehmer über einen bevorstehenden, diese bestehende Verbindung beeinflussenden, Test zu informieren.

Besonders vorteilhaft ist es, wenn die zu prüfende Vermittlungsstelle und die daran angeschlossenen Leitungen und Geräte zumindest teilweise für den digitalen Datenverkehr geeignet sind, insbesondere für den digitalen Datenverkehr nach dem Standard für ISDN, GSM und UMTS, und nach Standards für den paketvermittelten Datenverkehr, insbesondere nach dem Standard H.323 und GPRS. Durch die große Verbreitung der erwähnten Standards resultiert ein großer Einsatzbereich des dezentralen Prüfsystems. Darüber hinaus bieten derartige Prüflinge oft Testmöglichkeiten, die über jene von analogen Geräten weit hinaus gehen.

Vorteilhaft ist es, wenn die Kommunikation zwischen Vermittlungsstelle und Prüfgerät auf einem Signalisierungskanal einer digitalen Leitung erfolgt, insbesondere auf dem D-Kanal einer ISDN-Leitung oder dem Signalisierungskanal einer nach dem Standard H.323, GSM oder UMTS arbeitenden Leitung. Da die zu übermittelnde Datenmenge bei diesem Verfahren vergleichsweise gering ist, bleibt der Nutzkanal der Leitung von der Prüfung unbeeinflusst.

Eine vorteilhafte Ausgestaltung der Erfindung sieht vor, dass die zur Steuerung des Prüfprozesses vorgesehenen Befehle auf einer Ausgabeeinheit des Prüfgerätes angezeigt, mittels Eingabeeinheit des Prüfgerätes ausgewählt und an die Vermittlungsstelle gesendet werden, wobei die Befehle insbesondere im Prüfgerät gespeichert oder von der Vermittlungsstelle an dieses übermittelt werden. Dem Prüfpersonal liegen so jederzeit die zur Verfügung stehenden Prozesse zur Prüfung und Instandhaltung vor, welche beispielsweise durch Auswahl eines Menüpunktes auf der Anzeige eines Telekommunikationsendgerätes in der Vermittlungsstelle gestartet werden können. Durch Ergänzung des angezeigten Befehls mit zusätzlichen Daten kann beispielsweise ein Prüfauftrag für einen einer Rufnummer zugeordneten Teilnehmeranschluss auf einfache Weise angefordert werden. Gegebenenfalls können so auch Daten verändert werden, die der Prüfung und Instandhaltung einer Vermittlungsstelle dienen. Werden die Befehle von der Vermittlungsstelle aus übermittelt, steht ein besonders leistungsfähiges Verfahren zur Einführung neuer Funktionen oder zur Änderung bestehender Funktionen zur Verfügung, da die Änderungen nur in der Vermittlungsstelle erfolgen müssen und nicht in den einzelnen Prüfgeräten

Günstig ist es, wenn die zur Steuerung des Prüfprozesses vorgesehenen Befehle, mit Hilfe einer akustischen Eingabeeinheit des Prüfgerätes eingegeben und an die Vermittlungsstelle gesendet werden, wobei die Befehle insbesondere im Prüfgerät gespeichert oder von der Vermittlungsstelle an dieses übermittelt werden. Auf diese Weise wird eine optimale Beweglichkeit der mit der Prüfung beauftragten Person erreicht, da auch bei Eingabe eines Befehls beide Hände im wesentlichen frei sind. Der akustisch eingegebene Befehl, beispielsweise mittels Sprache, kann dabei schon im Prüfgerät selbst in ein anderes Übertragungsformat umgewandelt und übertragen oder aber auch ohne Umwandlung übertragen werden.

In beiden Fällen wird der übermittelte Befehl in der Vermittlungsstelle ausgewertet und ausgeführt.

Eine günstige Variante des erfindungsgemäßen Verfahrens sieht überdies die Übermittlung des Ergebnisses einer Prüfung von der Vermittlungsstelle an das Prüfgerät vor. Somit liegt dem mit der Prüfung und Instandhaltung betrauten Personal unmittelbar nach dem Ende einer Prüfung das Ergebnis vor. Darauf basierend können rasch weitere Entscheidungen getroffen, beziehungsweise weitere Prüfaufträge übermittelt werden. Die Übermittlung selbst kann dabei mittels Daten oder Sprache erfolgen. Desgleichen ist auch die Ausgabe optisch als Textinformation oder Grafik auf einer Anzeige des Prüfgeräts oder akustisch als Sprache beziehungsweise in Form von Tönen oder Geräuschen, denen jeweils eine gewisse Bedeutung zugewiesen wird, beispielsweise über einen Lautsprecher oder Ohrhörer, denkbar. Die Aufbereitung des Ergebnisses in das entsprechende Ausgabeformat kann dabei sowohl in der Vermittlungsstelle oder im Prüfgerät selbst erfolgen, beispielsweise über einen Ton- oder Sprachgenerator im Falle der akustischen Ausgabe.

Besonders vorteilhaft ist es, für die Steuerung des Prüfprozesses Daten und/oder Programmmodule vorgesehen sind, welche unabhängig von der zugrundegelegten Plattform eingesetzt werden können, insbesondere Daten nach dem HTML-Standard oder nach dem WML-Standard oder Programmmodule nach dem JAVA-Standard. Auf diese Weise kann die Generierung und Übermittlung von gerätespezifischen Daten und/oder Erstellung und Verwendung von gerätespezifischen Programmen vermieden werden.

HTML hat die Aufgabe, die logischen Bestandteile eines Dokuments zu beschreiben und enthält daher Befehle zum Markieren typischer Elemente eines Dokuments, wie Überschriften, Textabsätze, Listen, Tabellen oder Grafikreferenzen. Ein weiterer Hauptbestandteil von HTML sind Verweise auf weitere Dokumente oder Stellen innerhalb eines Dokuments, welche unter dem Begriff "Links" bekannt sind. HTML ist zu einem maßgebenden Standard für das Internet geworden.

Für das erfindungsgemäße Verfahren ist die Verwendung von HTML unter anderem deswegen vorteilhaft, weil so auf erprobte Standardkomponenten zurückgegriffen werden kann, wie zum Beispiel Standardanzeigesoftware für HTML-Daten, bekannt unter dem Begriff "WWW-Browser". Die für den Prüfprozess erforderlichen HTML-Daten werden beispielsweise zentral gespeichert und bei Bedarf an das Prüfgerät übermittelt. Diese Daten können aber auch je Prüfauftrag mit Hilfe eines Programmmoduls erstellt werden, beispielsweise um variable Prüfergebnisse so von der Vermittlungsstelle an das Prüfgerät zu übermitteln. Denkbar ist aber auch, dass die für die Steuerung des Prüfprozesses notwendigen HTML-Daten zumindest teilweise im Prüfgerät gespeichert sind.

WML hat ähnlich wie HTML die Aufgabe, die logischen Bestandteile eines Dokuments zu beschreiben, enthält aber zusätzliche Elemente, welche die Anzeige von Information auf einem vergleichsweise kleinen Bildschirm erleichtern. Aus diesem Grund und weil die zu übermittelnde Datenmenge bei diesem Verfahren relativ gering ist, ist die Verwendung von WML für mobile Endgeräte besonders vorteilhaft.

WML ist Bestandteil des Wireless Application Protocol, kurz WAP, welches ein international akzeptierter Standard für die Verbreitung von Internet-Inhalten über drahtlose Verbindungen und somit für die Konvergenz zwischen Mobilfunk und Internet ist. Der Standard ist in der "Wireless Application Protocol Architecture Specification, WAP Forum, April 30, 1998" beschrieben und beispielsweise unter der Internetadresse "http://www.wapforum.org/" verfügbar.

Für das erfindungsgemäße Verfahren ist die Verwendung von WML beziehungsweise WAP unter anderem deswegen vorteilhaft, weil so auf erprobte Standardkomponenten zurückgegriffen werden kann, wie zum Beispiel Standardanzeigesoftware für WML-Daten, wie sie in WAP-tauglichen Mobiltelefonen eingesetzt werden. Die für den Prüfprozess erforderlichen WML-Daten werden beispielsweise zentral gespeichert und bei Bedarf an das Prüfgerät übermittelt. Diese Daten können aber auch je Prüfauftrag mit Hilfe eines Programmmoduls erstellt werden, beispielsweise um variable Prüfergebnisse so von der Vermittlungsstelle an das Prüfgerät zu übermitteln. Denkbar ist aber auch, dass die für die Steuerung des Prüfprozesses notwendigen WML-Daten zumindest teilweise im Prüfgerät gespeichert sind.

Da sowohl Personal Computer als auch Telefone die angeführten Formate, zum Beispiel WML oder HTML, verarbeiten können ist die Verwendung eines einzigen Formates für beide Geräteklassen im Rahmen des erfindungsgemäßen Verfahrens prinzipiell möglich. Eine eventuelle Änderung der Methoden zur Prüfung und Instandhaltung muss daher nur für ein Datenformat erfolgen. Des weiteren steht im wesentlichen auch die selbe Bedienoberfläche für die verschiedenen Prüfgeräte zur Verfügung, weswegen ein Wechsel zwischen den einzelnen Geräteklassen für das Prüfpersonal auf einfache Weise erfolgen kann.

Vorteilhaft ist auch der Einsatz plattformunabhängiger Programmmodule nach dem JAVA-Standard. JAVA ist eine von Sun Microsystems entwickelte, vollkommen plattformunabhängige Programmiersprache mit spezieller Ausrichtung auf den Einsatz im Internet und lehnt sich in Aufbau und Syntax an die Programmiersprache C/C++ an. Java-Programme können in HTML-Dateien referenziert werden, wobei das Programm in den Arbeitsspeicher des aufrufenden Rechners geladen und dort vom Java-Interpreter des WWW-Browsers ausgeführt wird. JAVA ist ein maßgebender Standard für die komfortable Nutzung des Internets.

Ein wesentlicher Vorteil für das erfindungsgemäße Verfahren ist die Unabhängigkeit von bestimmten Hardwarearchitekturen und Betriebssystemen und im Falle von JAVA das Vorhandensein von erprobten Standardkomponenten. Diese Programmmodule werden zum Beispiel zentral gespeichert und bei Bedarf an das Prüfgerät übermittelt, wo sie eine bestimmte Funktion ausführen. Denkbar ist aber auch, dass die für die Steuerung des Prüfprozesses notwendigen Programmmodule zumindest teilweise im Prüfgerät gespeichert sind.

Eine günstige Variante der Erfindung ist weiterhin gegeben, wenn der Ablauf des Prüfprozesses in einer Datenbank des Telekommunikationsnetzes protokolliert wird. Diese Daten können später zu einer weiteren Fehleranalyse herangezogen werden, dienen beispielsweise jedoch auch dazu, angefallene Kosten zuzuordnen.

Besonders vorteilhaft ist es, wenn die Steuerung eines Prüfprozesses gegen unbefugten Zugriff gesichert ist, insbesondere durch Freigabe eines bestimmten Umfanges von Aktivitäten für ein bestimmtes Prüfgerät oder durch Sicherung mittels Zugangscode. Die Freigabe eines bestimmten Umfanges von Aktivitäten für ein bestimmtes Prüfgerät dient dazu, die Berechtigung zur Prüfung oder Instandhaltung innerhalb des mit der Prüfung und Instandhaltung betrauten Personenkreises unterschiedlich zu verteilen. Möglich ist aber auch, den Zugang zu verschiedenen Gruppen von Prozessen mit verschiedenen Zugangscodes zu sichern, um so innerhalb des Prüfpersonals die Zuständigkeiten abzugrenzen. Aufgrund der unterschiedlichen Bauart verschiedener Geräte ist oft nur eine Teilmenge aller möglichen Prozesse sinnvoll. Diese Einschränkung gilt auch gleichermaßen für die Vermittlungsstelle und die daran angeschlossenen Leitungen.

Die Aufgabe der Erfindung wird auch durch eine Anordnung gelöst,
- bei der ein Telekommunikationsnetz Teilnehmeranschlüsse umfasst, welche für die digitale Übertragung von Daten geeignet sind,
- bei der ein Prüfgerät über einen dieser Teilnehmeranschlüsse mit dem Telekommunikationsnetz verbunden ist,
- bei der das Telekommunikationsnetz zumindest eine Vermittlungsstelle umfasst, an welcher Leitungen zu diesen Teilnehmeranschlüssen angeschlossen sind,
- bei der in der Vermittlungsstelle (VST) Steuerprozesse und Daten verwaltet werden, die für die Prüfung und Instandhaltung der Vermittlungsstelle und der daran angeschlossenen Leitungen und Geräte erforderlich sind und
- bei der die Vermittlungsstelle Mittel zum Empfang von Daten umfasst, die für die Steuerung des Prüfprozesses vorgesehen sind.

Durch diese Anordnung werden unter anderem die beim erfindungsgemäßen Verfahren beschriebene Vorteile auf besonders einfache Weise erzielt. Auch die dort angeführten Erläuterungen zu digitalen Leitungen gelten hier gleichermaßen.

Günstig ist es auch, wenn die Vermittlungsstelle für zumindest einen Teil der angeschlossenen Leitungen externe Prüfklemmen umfasst, an die vom Telekommunikationsnetz unabhängige Prüfgeräte angeschaltet werden können. Die Flexibilität des Prüfsystems wird auf diese Weise wesentlich gesteigert, da die Leitungen auch mit Messgeräten getestet werden können, die - aus wirtschaftlichen oder technischen Gründen - nicht zum Umfang der Vermittlungsstelle gehören. Somit ist es für den Betreiber eines Telekommunikationsnetzes leicht möglich individuelle Messungen durchzuführen.

Vorteilhaft ist es weiterhin,
- wenn zusätzlich eine Schnittstelle zu weiteren Datennetzen vorhanden ist,
- wenn Daten, die vom Prüfgerät übermittelt wurden in diese Datennetze weitergeleitet werden können,
- wenn Daten, die aus diesen Datennetzen erhalten wurden an das Prüfgerät übermittelt werden können, und
- wenn Daten zur Steuerung eines Prüfprozesses aus diesen Datennetzen erhalten werden können.

Auf diese Weise können Prüfprozesse auch von anderen Datennetzen aus gesteuert werden. Des weiteren besteht die Möglichkeit entsprechende Daten in diese Datennetze weiterzuleiten, beispielsweise um einen Teilnehmer durch eine elektronische Textnachricht über das Auftreten, beziehungsweise Beheben eines Fehlers zu informieren. Möglich ist auch das Erstellen und Übermitteln von Prüf- oder Instandhaltungsaufträgen an das Prüfgerät des Prüfers, welche gegebenenfalls entsprechende Fehlerbeschreibungen umfassen können. Dieser Vorgang kann auch vollautomatisch durch ein beispielsweise in der Vermittlungsstelle oder in einem externen Datennetz laufendes Programm erfolgen. Der Prüfer kann auf diese Weise die an ihn gestellten Aufträge auf effiziente Weise durchführen.

Besonders vorteilhaft ist es, wenn als Prüfgerät ein Telefon vorgesehen ist. Für die Akzeptanz der Benutzer des Prüfsystems ist die potentielle Möglichkeit den Prozess zur Prüfung und Instandhaltung einer Vermittlungsstelle von jedem beliebigen Ort aus zu steuern wesentlich. Unter diesem Gesichtspunkt ist die Verwendung eines Telefons eine besonders vorteilhafte Ausgestaltung der Erfindung, da dieses eine sehr einfache Anschlussmöglichkeit an das Telekommunikationsnetz bietet und nahezu an jedem beliebigen Ort verfügbar ist. Dies trifft vor allem für Mobiltelefone zu. Die leichte Transportmöglichkeit von Mobiltelefonen ist für den Gebrauch durch den Servicetechniker deswegen besonders wichtig, weil für den Einsatz üblicherweise eine Vielzahl weiterer Ausrüstungsgegenstände mitzuführen ist.

Besonders vorteilhaft ist es weiterhin, wenn als Prüfgerät ein Personal Computer, insbesondere ein tragbarer Personal Computer, vorgesehen ist, der mit Mitteln zum Anschluss an eine digitale Teilnehmeranschlussleitung ausgestattet ist. Ein Personal Computer bietet aufgrund seiner Bauart vorteilhafte Möglichkeiten zur Ein- und Ausgabe von Daten, die für den Prüfprozess relevant sind. Darüber hinaus sind Personal Computer vielfältig einsetzbar und können neben der Funktion als Prüfgerät auch für andere Zwecke eingesetzt werden. Bei Verwendung eines tragbaren Personal Computers entfällt zusätzlich die fehlende Mobilität.

Im Hinblick auf den zunehmenden Einsatz von sogenannten "Personal Assistents" oder "Handhelds", welche teilweise auch den Anschluss an Datennetze über Mobilfunk bieten, lässt sich eine scharfe Grenze zwischen den Geräteklassen Laptop und Telefon, insbesondere Mobiltelefon an dieser Stelle nicht angeben. Durch die konvergierende Technologie werden so die Vorteile beider Klassen vereint.

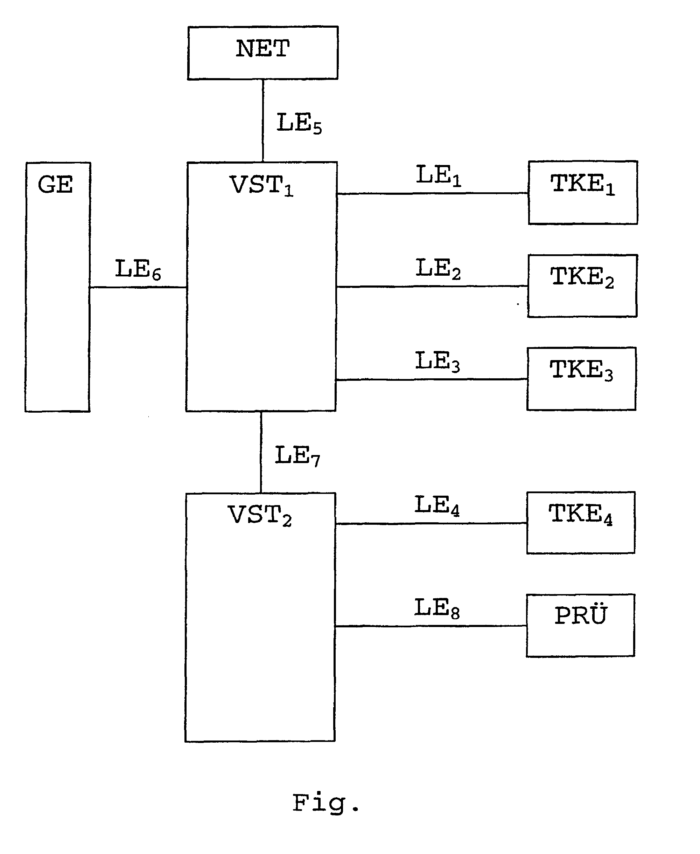

Kurze Beschreibung der Zeichnung:

Die Erfindung wird anhand der Figur näher erläutert, welche eine beispielhafte Anordnung zur Durchführung des erfindungsgemäßen Verfahrens zeigt.

Die in der Figur dargestellte Anordnung umfasst eine erste und eine zweite Vermittlungsstelle VST₁ und VST₂, vier Telekommunikationsendgeräte TKE₁..TKE₄, ein Prüfgerät PRÜ, ein Gerät GE und ein Datennetz NET. Das erste, zweite und dritte Telekommunikationsendgerät TKE₁..TKE₃ sind über eine erste, zweite und dritte Leitung LE₁..LE₃ an die erste Vermittlungsstelle VST₁ angeschlossen. Weiterhin umfasst die Anordnung eine über eine fünfte Leitung LE₅ hergestellte Verbindung zwischen der ersten Vermittlungsstelle VST₁ und dem Datennetz NET und eine über eine sechste Leitung LE₆ hergestellte Verbindung zwischen der ersten Vermittlungsstelle VST₁ und dem Gerät GE. Darüber hinaus ist die zweite Vermittlungsstelle VST₂ über eine siebente Leitung LE₇ an die erste Vermittlungsstelle VST₁ angeschlossen. Zusätzlich ist das vierte Telekommunikationsendgeräte TKE₄ über eine vierte Leitung LE₄ und das Prüfgerät PRÜ über eine achte Leitung LE₈ mit der zweiten Vermittlungsstelle VST₂ verbunden. Zumindest die zweite Vermittlungsstelle VST₂ als auch das Prüfgerät PRÜ verfügen in diesem Beispiel über Mittel zum Senden, Empfangen und Verarbeiten von digitalen Daten, beispielsweise im HTMLoder WML-Format.

Bester Weg zur Ausführung der Erfindung:

Die Funktion der Anordnung wird beispielhaft anhand einer Prüfung der dritten Leitung LE₃ und des dritten Telekommunikationsendgerätes TKE₃ mittels Prüfgerät PRÜ betrachtet.

Mittels Prüfgerät PRÜ wird eine Verbindung zur ersten Vermittlungsstelle VST₁ hergestellt, da das zu prüfende dritte Telekommunikationsendgerät TKE₃ an der ersten Vermittlungsstelle VST₁ angeschlossen ist. Daraufhin wird eine Liste der dort gespeicherten Prozesse zur Prüfung und Instandhaltung an das Prüfgerät PRÜ übermittelt und anschließend auf einer Anzeigeeinheit des Prüfgeräts PRÜ dargestellt. Gegebenenfalls können auch Programmmodule von der ersten Vermittlungsstelle VST₁ an das Prüfgerät PRÜ übermittelt werden, die dort anschließend ablaufen. Die prüfende Person wählt den gewünschten Prozess aus und sendet einen Startbefehl, gegebenenfalls inklusive der notwendigen Parameter, über die zweite Vermittlungsstelle VST₂ an die erste Vermittlungsstelle VST₁. Aufgrund dieses Befehles wird der angeforderte Prozess zur Prüfung und Instandhaltung in der ersten Vermittlungsstelle VST₁ gestaltet. Gegebenenfalls können in analoger Weise zu dem oben beschriebenen Ablauf noch zusätzlich erforderliche Daten abgefragt, beziehungsweise übermittelt werden, wodurch sich ein interaktiver Ablauf für die Anforderung eines Prozesses ergibt. Diese zusätzlichen Daten können beispielsweise die Rufnummer des dritten Telekommunikationsgerätes TKE₃ umfassen, sofern diese nicht beim Starten des Prozesses übermittelt wurde.

Das Ergebnis wird nach dem Ende der Prüfung von der ersten Vermittlungsstelle VST₁ an das Prüfgerät PRÜ übermittelt. Das Prüfpersonal kann so den Fehler lokalisieren und beheben. Abschließend wird mit Hilfe des Prüfgeräts PRÜ ein Bericht verfasst, an die erste Vermittlungsstelle VST₁ übermittelt und von dieser, beispielsweise zwecks Kostenberechnung, in das Datennetz NET weitergeleitet. Gegebenenfalls kann auch eine Gesprächsverbindung vom Prüfgerät PRÜ zum dritten Telekommunikationsendgerät TKE₃ aufgebaut werden, um den Teilnehmer über die durchgeführte Schadensbehebung zu informieren. Diese Anforderung erfolgt vorteilhaft durch Wahl eines Menüpunktes auf der Anzeige Prüfgeräts PRÜ und wird wiederum an die erste Vermittlungsstelle VST₁ übermittelt und dort ausgeführt.

Aus der Figur ist ersichtlich, dass das Prüfgerät PRÜ und das zu prüfende dritte Telekommunikationsendgerät TKE₃ nicht an die selbe Vermittlungsstelle VST₁ angeschlossen sein müssen. Vielmehr können die zu prüfenden Telekommunikationsendgeräte TKE der Teilnehmer auch im Telekommunikationsnetz verteilt und an verschiedenen Vermittlungsstellen VST angeschlossen sein.

Weiterhin können auch Geräte GE an eine Vermittlungsstelle VST angeschlossen sein, deren Zweck nicht im Telefonieren an sich liegt. Die Leitungen LE können überdies auch durch eine Funkübertragungsstrecke realisiert werden.

Sollen gleichartige Prüfungen oder Maßnahmen zur Instandhaltung beispielsweise für das erste bis vierte Telekommunikationsendgerät TKE₁..TKE₄ und die erste bis vierte Leitung LE₁..LE₄ durchgeführt werden, kann dies durch Eingabe eines einzigen Befehls auf dem Prüfgerät PRÜ erfolgen. Dabei wird zuvor eine Liste mit mehreren Einzelprüfungen und eine Liste mit Teilnehmeranschlüssen erstellt, für welche diese Prüfungen durchgeführt werden sollen. Die einzelnen Befehle werden danach sequentiell an die zweite Vermittlungsstelle VST₂ übermittelt, gegebenenfalls an die erst Vermittlungsstelle VST₁ weitergeleitet und in der jeweiligen Vermittlungsstelle ausgeführt. Denkbar ist aber auch, dass die gesammelten Befehle als ganzes vom Prüfgerät PRÜ an die erste Vermittlungsstelle VST₁ oder an die zweite Vermittlungsstelle VST₂ übermittelt wird und die sequentielle Ausführung erst dort erfolgt.

## Patentansprüche

1. Verfahren zur Prüfung und Instandhaltung einer Vermittlungsstelle in einem Telekommunikationsnetz, der daran angeschlossenen Geräte, insbesondere Telekommunikationsendgeräte, und der Verbindungen im Telekommunikationsnetz,
**dadurch gekennzeichnet,**
- **dass** ein Prüfgerät (PRÜ) ausschließlich an einen einzigen beliebigen digitalen Teilnehmeranschluss im Telekommunikationsnetz angeschlossen wird und
- **dass** die Steuerung des in der Vermittlungsstelle (VST) für die Prüfung und Instandhaltung ablaufenden Prüfprozesses mit Hilfe dieses Prüfgerätes (PRÜ) erfolgt.

2. Verfahren nach Anspruch 1, **dadurch gekennzeichnet, dass** die zu prüfende Vermittlungsstelle (VST) und die daran angeschlossenen Leitungen (LE) und Geräte (GE) zumindest teilweise für den digitalen Datenverkehr geeignet sind, insbesondere für den digitalen Datenverkehr nach dem Standard für ISDN, GSM und UMTS, und nach Standards für den paketvermittelten Datenverkehr, insbesondere nach dem Standard H.323 und GPRS.

3. Verfahren nach einem der Ansprüche 1 bis 2, **dadurch gekennzeichnet, dass** die zur Steuerung des Prüfprozesses vorgesehenen Befehle auf einer Ausgabeeinheit des Prüfgerätes (PRÜ) angezeigt, mittels Eingabeeinheit des Prüfgerätes (PRÜ) ausgewählt und an die Vermittlungsstelle (VST) gesendet werden, wobei die Befehle insbesondere im Prüfgerät (PRÜ) gespeichert oder von der Vermittlungsstelle (VST) an dieses übermittelt werden.

4. Verfahren nach einem der Ansprüche 1 bis 3, **dadurch gekennzeichnet, dass** das Ergebnis einer Prüfung von der Vermittlungsstelle (VST) an das Prüfgerät (PRÜ) übermittelt wird.

5. Verfahren nach einem der Ansprüche 1 bis 4, **dadurch gekennzeichnet, dass** für die Steuerung des Prüfprozesses Daten und/oder Programmmodule vorgesehen sind, welche unabhängig von der zugrundegelegten Plattform eingesetzt werden können, insbesondere Daten nach dem HTML-Standard oder nach dem WML-Standard oder Programmmodule nach dem JAVA-Standard.

6. Verfahren nach einem der Ansprüche 1 bis 5, **dadurch gekennzeichnet, dass** der Ablauf des Prüfprozesses in einer Datenbank des Telekommunikationsnetzes protokolliert wird.

7. Verfahren nach einem der Ansprüche 1 bis 6, **dadurch gekennzeichnet, dass** die Steuerung eines Prüfprozesses gegen unbefugten Zugriff gesichert ist, insbesondere durch Freigabe eines bestimmten Umfanges von Aktivitäten für ein bestimmtes Prüfgerät (PRÜ) oder durch Sicherung mittels Zugangscode.

8. Anordnung zur Durchführung des Verfahrens nach einem der Ansprüche 1 bis 7,
**dadurch gekennzeichnet,**
- **dass** ein Telekommunikationsnetz Teilnehmeranschlüsse umfasst, welche für die digitale Übertragung von Daten geeignet sind,
- **dass** ein Prüfgerät (PRÜ) über einen dieser Teilnehmeranschlüsse mit dem Telekommunikationsnetz verbunden ist,
- **dass** das Telekommunikationsnetz zumindest eine Vermittlungsstelle (VST) umfasst, an welcher Leitungen (LE) zu diesen Teilnehmeranschlüssen angeschlossen sind,
- **dass** in der Vermittlungsstelle (VST) Steuerprozesse und Daten verwaltet werden, die für die Prüfung und Instandhaltung der Vermittlungsstelle (VST) und der daran angeschlossenen Leitungen (LE) und Geräte (GE) erforderlich sind und
- **dass** die Vermittlungsstelle (VST) Mittel zum Empfang von Daten umfasst, die für die Steuerung des Prüfprozesses vorgesehen sind.

9. Anordnung nach Anspruch 8,
**dadurch gekennzeichnet,**
- **dass** zusätzlich eine Schnittstelle zu weiteren Datennetzen (NET) vorhanden ist,
- **dass** Daten, die vom Prüfgerät (PRÜ) übermittelt wurden in diese Datennetze (NET) weitergeleitet werden können,
- **dass** Daten, die aus diesen Datennetzen (NET) erhalten wurden an das Prüfgerät (PRÜ) übermittelt werden können, und
- **dass** Daten zur Steuerung eines Prüfprozesses aus diesen Datennetzen (NET) erhalten werden können.

10. Anordnung nach einem der Ansprüche 8 bis 9, **dadurch gekennzeichnet, dass** als Prüfgerät (PRÜ) ein Telefon vorgesehen ist.

## Claims

1. Method for testing and maintaining a switching centre in a telecommunications network, the appliances, particularly telecommunications terminals, connected thereto, and the connections in the telecommunications network,
**characterized**
- **in that** a test unit (PRÜ) is connected exclusively to a single arbitrary digital subscriber line in the telecommunications network, and
- **in that** the test process taking place in the switching centre (VST) for the purposes of testing and maintenance is controlled using this test unit (PRÜ).

2. Method according to Claim 1, **characterized in that** the switching centre (VST) to be tested and at least some of the lines (LE) and appliances (GE) connected thereto are suitable for digital data traffic, particularly for digital data traffic based on the standard for ISDN, GSM and UMTS, and based on standards for packet-switched data traffic, particularly based on the standard H.323 and GPRS.

3. Method according to one of Claims 1 to 2, **characterized in that** the commands provided for controlling the test process are displayed on an output unit for the test unit (PRÜ), are selected using an input unit for the test unit (PRÜ), and are sent to the switching centre (VST), with the commands being stored, in particular, in the test unit (PRÜ) or being transmitted thereto from the switching centre (VST).

4. Method according to one of Claims 1 to 3, **characterized in that** the result of a test is transmitted to the test unit (PRÜ) from the switching centre (VST).

5. Method according to one of Claims 1 to 4, **characterized in that**, for controlling the test process, data and/or program modules are provided which can be used independently of the fundamental platform, particularly data based on the HTML standard or based on the WML standard or program modules based on the JAVA standard.

6. Method according to one of Claims 1 to 5, **characterized in that** the sequence of the test process is logged in a database in the telecommunications network.

7. Method according to one of Claims 1 to 6, **characterized in that** the control of a test process is protected against unauthorized access, particularly by enabling a particular scope of activities for a of access code.

8. Arrangement for carrying out the method according to one of Claims 1 to 7,
**characterized**
- **in that** a telecommunications network comprises subscriber lines which are suitable for digital transmission of data,
- **in that** a test unit (PRÜ) is connected to the telecommunications network via one of these subscriber lines,
- **in that** the telecommunications network comprises at least one switching centre (VST) at which lines (LE) for these subscriber lines are connected,
- **in that** the switching centre (VST) manages control processes and data which are required for testing and maintaining the switching centre (VST) and the lines (LE) and appliances (GE) connected thereto, and
- **in that** the switching centre (VST) comprises means for receiving data which are provided for controlling the test process.

9. Arrangement according to Claim 8,
**characterized**
- **in that** an interface to other data networks (NET) is additionally available,
- **in that** data which have been transmitted by the test unit (PRÜ) can be forwarded to these data networks (NET),
- **in that** data which have been received from these data networks (NET) can be transmitted to the test unit (PRÜ), and
- **in that** data for controlling a test process can be received from these data networks (NET).

10. Arrangement according to either of Claims 8 and 9, **characterized in that** the test unit (PRÜ) provided is a telephone.

## Revendications

1. Procédé de contrôle et d'entretien d'un central téléphonique d'un réseau de télécommunication, des appareils qui y sont raccordés, notamment des terminaux de télécommunication et des liaisons du réseau de télécommunication,
**caractérisé**
- **en ce que** l'on raccorde un appareil (PRÜ) de contrôle exclusivement à un seul raccordement d'abonné numérique quelconque du réseau de télécommunication et
- **en ce qu'**on effectue à l'aide de cet appareil (PRÜ) de contrôle la commande de l'opération de contrôle se déroulant dans le central (VST) téléphonique pour le contrôle et l'entretien.

2. Procédé suivant la revendication 1, **caractérisé en ce que** les centraux (VST) téléphoniques à contrôler et les lignes (LE) et appareils (GE) s'y raccordant sont appropriés au moins en partie au trafic de données numériques, notamment au trafic de données numériques suivant le standard pour l'ISDN, le GSM et l'UMTS et suivant des standards pour le trafic de données par paquets, notamment suivant le standard H.323 et GPRS.

3. Procédé suivant l'une des revendications 1 à 2, **caractérisé en ce que** les instructions prévues pour la commande de l'opération de contrôle sont affichées sur une unité de sortie de l'appareil (PRÜ) de contrôle, sont choisies au moyen d'une unité d'entrée de l'appareil (PRÜ) de contrôle et sont envoyées au central (VST) téléphonique, les instructions étant mémorisées notamment dans l'appareil (PRÜ) de contrôle ou transmises du central (VST) téléphonique à celui-ci.

4. Procédé suivant l'une des revendications 1 à 3, **caractérisé en . ce que** le résultat d'un contrôle est transmis du central (VST) téléphonique à l'appareil (PRÜ) de contrôle.

5. Procédé suivant l'une des revendications 1 à 4, **caractérisé en ce qu'**il est prévu, pour la commande de l'opération de contrôle, des données et/ou des modules de programme qui peuvent être utilisés indépendamment de la plate-forme de base, notamment des données suivant le standard HTML ou suivant le standard WML ou des modules de programme suivant le standard JAVA.

6. Procédé suivant l'une des revendications 1 à 5, **caractérisé en ce qu'**il est effectué un compte-rendu du déroulement de l'opération de contrôle dans une banque de données du réseau de télécommunication.

7. Procédé suivant l'une des revendications 1 à 6, **caractérisé en ce que** la commande d'une opération de contrôle est assurée vis-à-vis d'un accès non autorisé, notamment par validation d'un certain nombre d'activités pour un appareil (PRÜ) de contrôle déterminé ou par une sécurité au moyen d'un code d'accès.

8. Dispositif pour la mise en oeuvre du procédé suivant l'une des revendications 1 à 7,
**caractérisé**
- **en ce qu'**un réseau de télécommunication comprend des raccordements d'abonné qui sont appropriés à la transmission numérique de données,
- **en ce qu'**un appareil (PRÜ) de contrôle est relié au réseau de télécommunication par l'un de ces raccordements d'abonné,
- **en ce que** le réseau de télécommunication comprend au moins un central (VST) téléphonique auquel sont raccordées des lignes (LE) allant à ces raccordements d'abonné,
- **en ce qu'**il est géré dans le central (VST) téléphonique des opérations de commande et des données qui sont nécessaires pour le contrôle et l'entretien du central (VST) téléphonique et des lignes (LE) et appareils (GE) qui y sont raccordés, et
- **en ce que** le central (VST) téléphonique comprend des moyens de réception de données qui sont prévus pour la commande de l'opération de contrôle.

9. Dispositif suivant la revendication 8,
**caractérisé,**
- **en ce qu'**il y a en outre une interface vers d'autres réseaux (NET) de données,
- **en ce que** des données qui ont été transmises par l'appareil (PRÜ) de contrôle peuvent être acheminées vers ces réseaux (NET) de données,
- **en ce que** des données qui ont été obtenues à partir de ces réseaux (NET) de données peuvent être transmises à l'appareil (PRÜ) de contrôle, et
- **en ce que** des données de commande d'une opération de contrôle peuvent être obtenues à partir de ces réseaux (NET) de données.

10. Dispositif suivant l'une des revendications 8 à 9, **caractérisé en ce qu'**il est prévu un téléphone comme appareil (PRÜ) de contrôle.
